# EUROPEAN PATENT APPLICATION

(11) **EP 2 051 048 A1**
(43) Date of publication of application: **22.04.2009**
(21) Application number: 07020350.0
(22) Date of filing: 18.10.2007
(51) Int. Cl.: G01F 13/00, B67D 5/01

(54) **Method and device for dispensing a fluid**

(71) Applicant: SA Sartorius Technologies NV, 1800 Vilvoorde (BE)
(72) Inventor: Gilles, Hugues, 1150 St. Pierre Woluwe (BE); Decheneux, Jean-Pierre, 4170 Comblain au Pont (BE); Janssens, Paul, 2660 Hoboken (BE); Verhoeven, Eric, 3128 Baas (BE)
(74) Representative: Naeven, Ralf

(57) **Abstract**

A method and a device for fractionizing a fluid are presented. In order to achieve the accuracy of the transfer with regard to the amount while at the same time automating the fractionizing operation, it is proposed to pump the fluid (1) by means of a pump (4) out of a starting container (2) via a feed line (5) into a target container (3), to record the amount of fluid transferred into the target container (3) and, when there is a predetermined amount of fluid in the target container (3), restrict or interrupt the fluid feed to the target container (3) at a first feed restricting point (13) provided between the pump (4) and the target container (3). As from a predetermined degree of restriction or when the fluid feed is interrupted, a first branch line (7), branching off from the feed line (5) between the pump (4) and the first feed restricting point (13), is opened at a first branch restricting point (14). With the pump (4) continuing to run, the fluid (1) is at least partially discharged via the first branch line (7), for example back into the starting container (2).

## Description

The invention relates to a method and a device for fractionizing a fluid, the device comprising a first feed line, provided between the starting container and the target container, and means for establishing the amount of fluid filled into the target container.

Such methods and devices are known in particular in the pharmaceutical industry. They are generally intended for transferring a fluid, for example a liquid, with the most accurate metering possible. A fluid is understood here as meaning any free-flowing medium, in particular a liquid. The amount of fluid transferred can be determined for example by means of a filling level indicator or by means of a balance on which the target container is placed.

In the pharmaceutical field, a sterile transfer of the fluid is generally required. Suitable in particular for this are flexible fluid lines made of plastic, which are easily exchangeable. Such fluid lines also allow the use of peristaltic pumps, so that the fluid to be transferred does not come into contact with parts of the pump.

According to the prior art, when the desired filling level of the target container is reached, the pump used is switched off. This procedure has the disadvantage that the high accuracies desired in numerous applications cannot be ensured. If, according to the procedure known from the prior art, the peristaltic pump is used exclusively for the transfer, deviations from the target amount by 10 g to 40 g are generally accepted in the case of a transferred amount of 10 kg. The inaccuracy here is not a result of the measuring of the amount of fluid transferred but is caused by the fact that the pumping rate cannot be controlled more accurately. In the pharmaceutical industry, however, accuracies of 1 g or still higher accuracies are required even with target amounts of 10 kg to 40 kg.

At the same time, however, fastest possible filling of the target container is desired, which requires a high fluid throughput. In order to achieve such accuracy, it is generally known to switch off the pump already before the desired filling level is reached and subsequently fill the target container up to the desired filling level manually with a pipette. This procedure is time-consuming and, in particular also because of the manual use of pipettes, also requires special measures to maintain the desired sterility.

It is thus the object of the invention to provide a method and a device of the type mentioned at the beginning that allow high accuracy of the fluid transfer with less effort, and also make it possible for the transfer operation to be completely automated.

This object is achieved by of a method of the type mentioned at the beginning in that
a) the fluid is transferred out of a starting container via a feed line into a target container and the amount of fluid transferred into the target container is recorded,
b) when there is a predetermined amount of fluid in the target container, the fluid feed to the target container is restricted or interrupted at a first feed restricting point,
c) as from a predetermined degree of restriction or when the fluid feed is interrupted, a first branch line, branching off from the feed line upstream of the first feed restricting point in the direction of flow, is opened at a first branch restricting point and
d) the fluid is at least partially discharged via the first branch line.

The restriction of the feed line has the effect that the amount of fluid flowing through is clearly reduced. It is consequently possible to operate at first with a great fluid throughput, to make the fractionizing operation as fast as possible. Shortly before the desired amount of fluid is reached in the target container, the fluid throughput is increasingly reduced by means of the restriction, so that the final metering can be carried out with correspondingly increasing accuracy. As the restriction commences, or at a later point in time, but at the latest when the fluid feed to the target container is completely interrupted, the first branch restricting point, and consequently the branch line, is opened, so that part of the fluid, or with the feed line completely closed the complete amount of fluid arriving at the first feed restricting point, is drained off, so that it does not reach the target container. As a result, a steady fluid flow is given. In case a pump is used to drive the fluid through the system, the pump need not to be switched off and the pump or the fluid lines are not subjected to the load of a sharply rising fluid pressure.

Instead of using a pump it is possible to use gravitation by placing the starting container in a suitable height above the further elements of the fractionizing system. In a further alternative it is possible to use a pressurized starting container to drive the fluid flow. Thus, the method according to the invention is independent of the manner the fluid flow is driven.

The steady fluid flow is advantageous in particular whenever a number of target containers are to be filled one after the other. Then, with the fluid feed completely interrupted and discharge of the fluid through a branch line, the filled target container can be removed, a new target container can be positioned for filling and the feed line can be opened and the branch line closed again. Consequently, the accuracy of the filling of the target container is increased as a result of the restriction and only subsequent interruption of the fluid throughput, without the pump that is optionally used having to be switched off when the target amount is reached.

Furthermore, it may be advantageous to perform the method according to the invention in such a way that the first branch line conducts the fluid back to the starting container. In this way, the fluid that does not find its way into the target container is recirculated and made available for the next fractionizing operation.

Alternatively, it may be provided to feed the branched-off part of the fluid into a separate container or to some other use.

Furthermore, the method according to the invention may be performed in such a way that the first branch line conducts the fluid into a second target container and the filling level of the latter is recorded, and, as from a predetermined filling level of the second target container, the fluid feed to the second target container is restricted or interrupted.

In this way, the fluid can be fractionized into two target containers directly one after the other. It is therefore possible for the already filled first target container to be removed and replaced by a third target container during the fractionizing into the second target container, so that there is no break in the fractionizing process. For this purpose, it may be provided that the restriction or interruption of the fluid feed to the second target container is performed by means of the first branch restricting point and, as from a predetermined degree of restriction or when the fluid feed to the second target container is interrupted, the first feed restricting point is opened. The opening of the first feed restricting point allows the feeding of the fluid to the third target container, which has been installed in the meantime. In this way, the fluid feed can be continually switched over between a ready-filled target container and an empty target container.

The method according to the invention may also be performed in such a way that
- the fluid feed to the second target container is restricted or interrupted by means of a second feed restricting point, arranged in the first branch line,
- as from a predetermined degree of restriction or when the fluid feed to the second target container is interrupted, a second branch line, branching off upstream of the second feed restricting point in the direction of flow, is opened at a second branch restricting point and
- the fluid is at least partially discharged via the second branch line.

Consequently, once fractionizing into the second target container has been completed, the fluid is not returned through the feed line to the original location of the first target container but is fed via the second branch line, for example for further use. This may be a third target container, so that the device is constructed in the manner of a cascade. It goes without saying that this construction can be continued in a corresponding way with further branch lines. It is in this case possible to supply all the target containers with different amounts of fluid. For each target container, the filling level can be established and used for controlling the corresponding restricting points.

It may be provided that the fluid pumped into the second or further branch line is returned to the starting container, completing a cycle.

The method according to the invention may also be performed in such a way that the degree of opening of the first/second branch restricting point and the degree of opening of the first/second feed restricting point depend explicitly on each other. The restricting points consequently always work together in pairs. This takes place by at least one restricting point of a pair being at least partially open, so the pump never has to pump the fluid into a line system that is closed on all sides. The opening or closing of the restricting points can be performed gradually, in steps or continuously.

In this case, the method according to the invention can also be performed in such a way that the first/second feed restricting point is only closed completely when the first/second branch restricting point is open and the first/second branch restricting point is only closed completely when the first/second feed restricting point is open.

With further pairs of restricting points, the procedure described can apply correspondingly to them.

Finally, the method according to the invention may also be performed in such a way that the amount of fluid filled into the first or second target container is automatically recorded and is used for controlling the associated feed restricting point. It goes without saying that the same also applies correspondingly to possible further target containers.

In this way, the entire fractionizing operation up to achieving the target amount can be automated. In addition, with a construction in the manner of a cascade, the switching over to further target containers can be performed automatically.

In the case of a device of the type mentioned at the beginning, the aforementioned object is achieved by
a) a first feed closing element, suitable for the partial and complete closing of the feed line;
b) a first branch line, branching off from the feed line upstream of the first feed closing element in the direction of flow,
c) a first branch closing element, suitable for the partial and/or complete closing of the first branch line, and
d) means for controlling the closing elements, which are set up in such a way that the first branch closing element is fully or partially open when the first feed closing element begins the closing or has reached a predetermined closing state.

Further refinements of the device according to the invention are provided by Subclaims 11 to 20.

The closing elements are used at the corresponding restricting points described above. It is advantageous in this respect to use for each pair of closing elements, which comprises a feed closing element and a branch closing element, a holding unit, which receives the pair of closing elements and at the same time allows fixing of the associated fluid lines. Releasable fixing of the fluid lines may be performed for example by means of a simple clamping mechanism, so that the clamping and the exchange of fluid lines can be easily performed manually. The holding unit may in this case also accommodate the drive mechanism for the closing elements and be closed on all sides apart from apertures for the fluid lines. If the closing elements belonging to a pair are produced together from one piece, forming a single closing unit, and this is arranged between the two associated fluid lines, the closing unit can bring about the closing of one of the fluid lines, for example the feed line, and at the same time the opening of the other fluid line, in this example therefore the branch line, by a single movement of a linear or rotary kind.

An exemplary embodiment of the method according to the invention and of the device according to the invention is presented below on the basis of figures, in which:
- Figure 1: schematically shows the device according to the invention in an overview,
- Figure 2: schematically shows a holding unit with a closing unit, closing the branch line, in plan view,
- Figure 3: shows the holding unit according to Figure 2, the closing unit closing the feed line,
- Figure 4: shows a device extended by a second target container,
- Figure 5: shows a holding unit in a perspective oblique view,
- Figure 6: shows the holding unit according to Figure 5 in plan view,
- Figure 7: shows the holding unit according to Figure 5 in side view and
- Figure 8: shows the holding unit according to Figures 5 to 7 with a protective cap fitted.

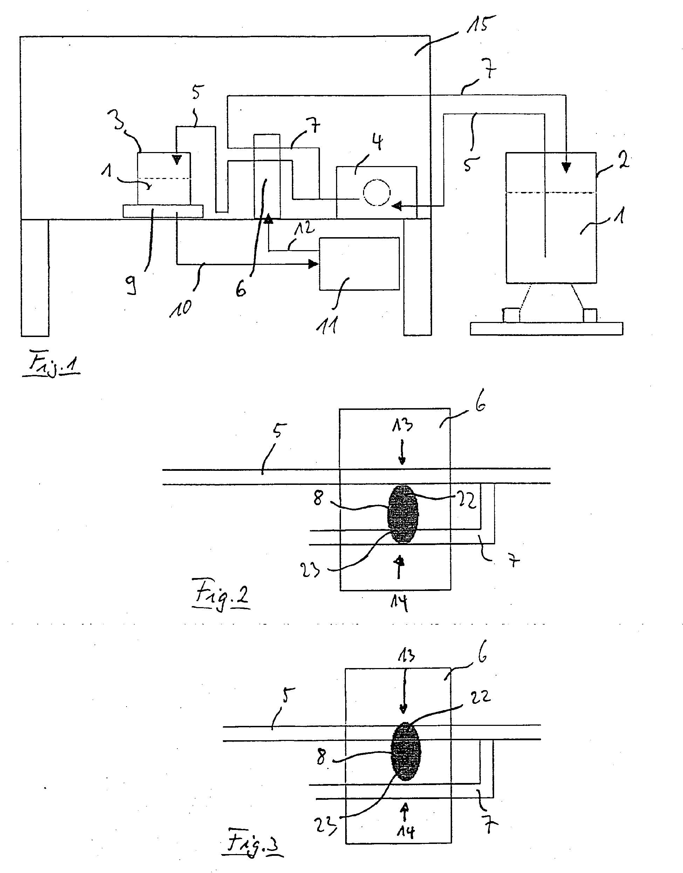

Figure 1 schematically shows an overview of the device according to the invention. A fluid 1 is to be fractionized from a starting container 2 into a target container 3. This is performed by means of a peristaltic pump 4 via a feed line 5, which is a flexible plastic line.

Provided between the pump 4 and the target container 3 is a holding unit 6, which is described in more detail later and in which the feed line 5 is releasably fixed. Between the pump 4 and the holding unit 6, a branch line 7, which is likewise releasably fixed to the holding unit 6, branches off from the feed line 5 by means of a T piece not separately represented here. Like the feed line 5, the branch line 7 is a flexible plastic line. The branch line 7 leads back to the starting container 2.

Figures 2 and 3 schematically show the holding unit 6 in plan view. Also represented are the feed line 5 and the branch line 7. Not represented in Figures 2 and 3 are the measures for fixing the fluid lines 5 and 7 to the holding unit 6. Provided on the holding unit 6 is a closing unit 8, which can be moved by means of a mechanism not represented here. In Figure 2, the branch line 7 is closed by means of the closing unit 8, in that the closing unit presses on the flexible branch line 7, clamping it off from the outside. By contrast, the feed line 5 is completely open in Figure 2, so that the fluid pumped by the pump 4 passes into the target container 3 (Figure 1).

According to Figure 1, the target container 3 is placed on a balance 9, by means of which the amount of fluid 1 transferred can be established. A measuring signal of the balance 9 is passed via a data line 10 to a data processing control unit 11, which completely controls the fractionizing operation by means of correspondingly set-up software. Stored therein is the desired amount of fluid to be transferred as well as a program for controlling the closing unit 8. If the amount of fluid transferred into the target container 3 exceeds a predetermined limit value, which lies below the target amount, the control unit 11 uses the signal line 12 to make the closing unit 8 restrict the throughflow through the feed line 5. For this purpose, the closing unit 8 presses onto the feed line 5 from the outside, without completely closing it. At the same time, the branch line 7 opens to a corresponding degree, so that the pump 4 does not have to work against an increased throughflow resistance of the fluid 1. The closer the transferred amount of fluid comes to the target amount, the more the feed line 5 is closed at the feed restricting point 13. Consequently, the throughflow through the feed line 5 is adapted to the desired accuracy with regard to the amount of fluid to be transferred. On the basis of the increasing opening of the branch line 7 at the branch restricting point 14, an increasing proportion of the fluid 1 pumped by the pump 4 is returned to the starting container 7. Figure 3 finally shows the state in which the feed line 5 is completely closed and the branch line 7 is completely open. The transition from the state of Figure 2 to the state of Figure 3 may take place in steps or continuously.

The closing unit 8 consequently serves the feed line 5 and the branch line 7 simultaneously. The closing unit 8 may therefore be regarded as a one-piece combination of a closing element 22 for the feed line 5 and a closing element 23 for the branch line 7. It goes without saying that it is conceivable to form the closing elements 22 and 23 separately and also to drive them separately.

A device and method of the type described are used with preference in the pharmaceutical field, where sterility of the fluid transfer generally has to be ensured. It is therefore provided in Figure 1 to arrange the target container 1, the balance 9, the pump 4, the holding unit 6 and the parts of the feed line 5 and the branch line 7 that connect these elements in a closed-off clean room 15.

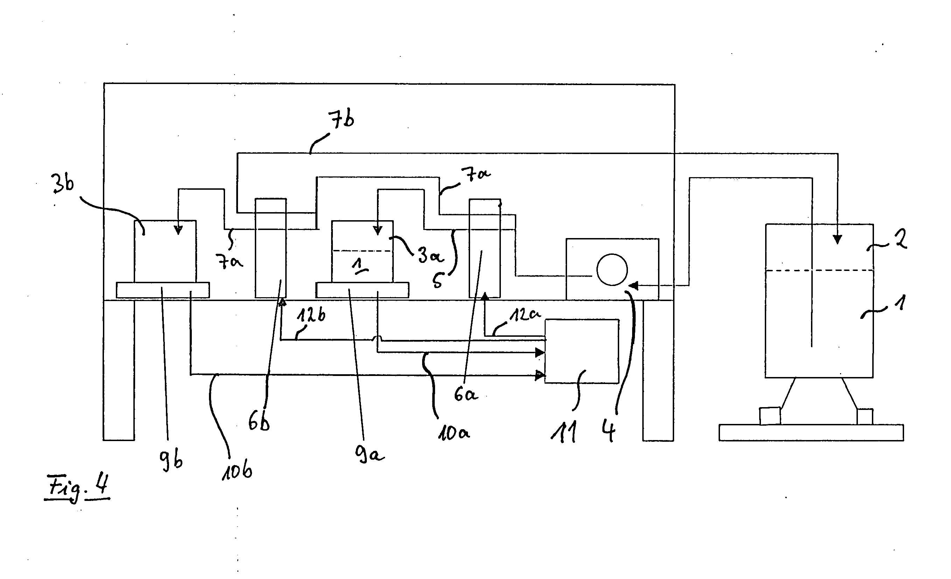

Figure 4 shows a device which is extended by a second target container 3b in comparison with the device according to Figure 1. As in the device according to Figure 1, a fluid 1 is fractionized from the starting container 2 by means of a peristaltic pump 4 and a feed line 5, at first into a first target container 3a. A first branch line 7a branches off from the feed line 5 by means of a T piece not separately represented here. The feed line 5 and the first branch line 7a are held by means of a first holding unit 6a, which at the same time has a closing unit not represented in Figure 4. The first holding unit 6a corresponds to the holding unit 6 described in Figures 1, 2 and 3 and has the same functions. The first target container 3a is placed on a first balance 9a, by means of which the amount of fluid 1 transferred into the first target container 3a can be established. A measuring signal of the balance 9a is passed via a first data line 10a to the data processing control unit 11. As already described with respect to Figure 1, the control unit 11 uses a first signal line 12a to make the closing unit, not separately represented here, in the holding element 6a restrict the throughflow through the feed line 5 if the amount of fluid transferred exceeds a predetermined limit value. At the same time, the first branch line 7a opens to a corresponding degree.

The first branch line 7a leads via a second holding unit 6b to the second target container 3b, which is placed on a second balance 9b. A second branch line 7b, which is likewise held by the second holding unit 6b, branches off from the first branch line 7a between the first holding unit 6a and the second holding unit 6b by means of a T piece not separately represented here. The second holding unit 6b is identical in construction to the first holding unit 6a.

When the first holding unit 6a begins to open the first branch line 7a, this first branch line 7a is completely open in the second holding unit 6b, while the second branch line 7b is completely closed. That is to say that the fluid 1 pumped into the first branch line 7a reaches the second target container 3b via the first branch line 7a, so that for a certain time both target containers 3a and 3b are filled. According to the representation of Figure 1, the control unit 11 causes the feed line 5 to be gradually closed completely. It is closed completely when the first target container 3a has reached the desired final filling level. At this moment, the first branch line 7a is completely open and the fluid 1 pumped by the pump 4 completely reaches the second target container 3b.

Alternatively, it may be provided to begin the filling of the second target container 3b only when the filling of the first target container 3a is completely concluded. In this case, the following applies: while the first branch line 7a is opened at the first holding unit 6a, at the second holding unit 6b the first branch line 7a is still closed and the second branch line 7b is open. Only after complete filling of the first target container 3a and when the feed line 5 is closed does the opening of the first branch line 7a at the second holding unit 6b begin, while the second branch line 7b begins to close.

In the case of both variants described above, signals of the second balance 9b concerning the filling level of the second target container 3b are communicated to the control unit 11 via a second data line 10b. If a certain previously fixed limit value is exceeded, the control unit 11 uses the second signal line 12b to make the holding unit 6b restrict the throughflow through the first branch line 7a and gradually close the first branch line 7a. To the extent to which the first branch line 7a is closed, the second branch line 7b opens. The fluid pumped through the second branch line 7b then reaches the starting container 2, so that this part of the fluid 1 has been recycled.

It goes without saying that it is conceivable to extend the construction described by adding further target containers in a corresponding way in the manner of a cascade.

When the first target container 3a is completely filled and the filling of the second target container 3b has begun, the first target container 3a can be replaced by a further target container not represented here, which is then placed onto the first balance 9a. In this case, it may be provided not to open the second branch line 7b when the target filling of the second target container 3b is reached, but instead to close the first branch line 7a at the first holding unit 6a and consequently to open the feed line 5, so that from then on the further target container, located on the first balance 9a, is filled.

It may also be provided when filling the first target container 3a or a further target container located on the first balance 9a, in case the desired filling level is reached, to keep the first branch line 7a closed and instead keep the second branch line 7b open at the second holding unit 6b. Then, when the first branch line 7a is opened at the first holding unit 6a, the fluid 1 can pass via the first branch line 7a and, as from the branch, via the second branch line 7b directly into the starting container 2.

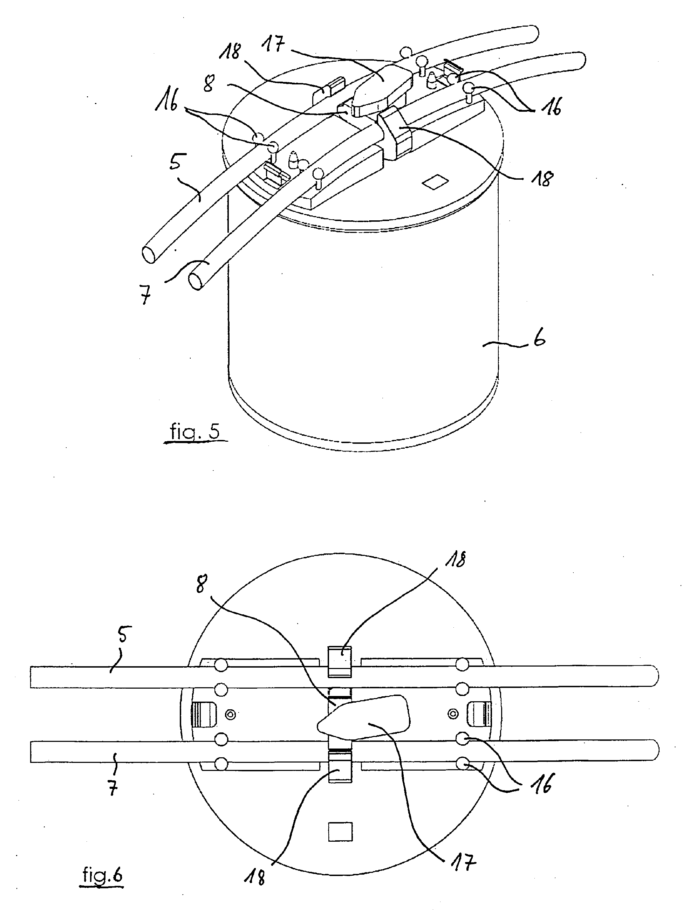

Figure 5 shows the holding unit 6, as can be used in the devices according to Figure 1 or 4, in a perspective oblique view, Figure 6 shows it in plan view. For the description of Figures 5 and 6, it is assumed that the fluid lines represented are the feed line 5 and the branch line 7. It goes without saying that, in a corresponding way, the holding unit 6 is also used for holding and closing or opening the first and second branch line 7a or 7b according to the device in Figure 4. The feed line 5 and the branch line 7 are releasably fixed to the holding unit 6 by means of clamping elements 16.

Arranged between the feed line 5 and the branch line 7 is the closing unit 8, which can be driven by means of a drive lever 17. In the position represented in Figures 5 and 6, the closing unit 8 completely closes the branch line 7, while the feed line 5 is completely open. Both the feed line 5 and the branch line 7 respectively lie against an abutting element 18 in the region of the closing unit 8, so that the feed line 5 or the branch line 7 cannot escape from the closing unit 8.

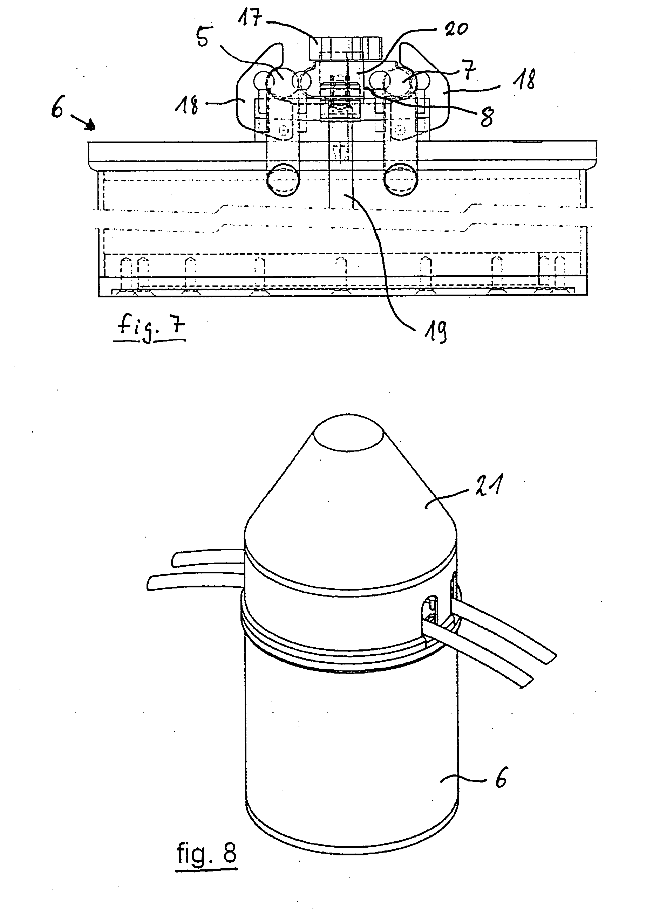

Figure 7 shows the holding unit 6 in side view. The closing unit 8 can be made to move between the abutting elements 18. The drive lever 17 is driven by means of a drive spindle 19 and engages the closing unit 8 by means of a pin 20. In the position according to Figures 5 to 7, the feed line 5 is completely open and the branch line 7 is completely closed. The mechanism, not represented in the figures, for driving the drive spindle 19 is located in a protected manner in the housing of the holding unit 6.

Finally, Figure 8 shows the holding unit 6 with a cover shroud 21, so that the closing mechanism is protected from external influences and contaminants.

### List of reference numerals

- 1: fluid
- 2: starting container
- 3: target container
- 4: pump
- 5: feed line
- 6: holding unit
- 7: branch line
- 8: closing unit
- 9: balance
- 10: data line
- 11: control unit
- 12: signal line
- 13: feed restricting point
- 14: branch restricting point
- 15: clean room
- 16: clamping element
- 17: drive lever
- 18: abutting element
- 19: drive spindle
- 20: pin
- 21: cover shroud
- 22: closing element of the feed line
- 23: closing element of the branch line

## Claims

1. Method for fractionizing a fluid, in which
a) the fluid (1) is transferred out of a starting container (2) via a feed line (5) into a target container (3) and the amount of fluid transferred into the target container (3) is recorded,
b) when there is a predetermined amount of fluid in the target container (3), the fluid feed to the target container (3) is restricted or interrupted at a first feed restricting point (13),
c) as from a predetermined degree of restriction or when the fluid feed is interrupted, a first branch line (7), branching off from the feed line (5) upstream of the first feed restricting point (13) in the direction of flow, is opened at a first branch restricting point (14) and
d) the fluid (1) is at least partially discharged via the first branch line (7).

2. Method according to Claim 1, **characterized in that** the first branch line (7) conducts the fluid (1) back to the starting container (2).

3. Method according to Claim 1, **characterized in that**
a) that the first branch line (7a) conducts the fluid (1) into a second target container (3b) and the filling level of the latter is recorded, and
b) as from a predetermined filling level of the second target container (3b), the -fluid feed to the second target container (3b) is restricted or interrupted.

4. Method according to Claim 3, **characterized in that** the restriction or interruption of the fluid feed to the second target container (3b) is performed by means of the first branch restricting point (14) and, as from a predetermined degree of restriction or when the fluid feed to the second target container (3b) is interrupted, the first feed restricting point (13) is opened.

5. Method according to Claim 3, **characterized in that**
c) the fluid feed to the second target container (3) is restricted or interrupted by means of a second feed restricting point, arranged in the first branch line (7a),
d) as from a predetermined degree of restriction or when the fluid feed to the second target container (3b) is interrupted, a second branch line (7b), branching off upstream of the second feed restricting point in the direction of flow, is opened at a second branch restricting point and
e) the fluid (1) is at least partially discharged via the second branch line (7b).

6. Method according to Claim 5, **characterized in that** the second branch line (7b) conducts the fluid (1) back to the starting container (2).

7. Method according to one of the preceding claims, **characterized in that** the degree of opening of the first/second branch restricting point (14) and the degree of opening of the first/second feed restricting point (13) depend explicitly on each other.

8. Method according to Claim 7, **characterized in that** the first/second feed restricting point (13) is only closed completely when the first/second branch restricting point (14) is open and the first/second branch restricting point (14) is only closed completely when the first/second feed restricting point (13) is open.

9. Method according to one of the preceding claims, **characterized in that** the amount of fluid filled into the first or second target container (3) is automatically recorded and is used for controlling the associated feed restricting point (13).

10. Device for fractionizing a fluid from a starting container (2) into a target container (3), comprising a first feed line (5), provided between the starting container (2) and the target container (3), and means (9) for establishing the amount of fluid in the target container (3),
**characterized by**
a) a first feed closing element (22), suitable for the partial and complete closing of the feed line (5),
b) a first branch line (7), branching off from the feed line (5) upstream of the first feed closing element (22) in the direction of flow,
c) a first branch closing element (23), suitable for the partial and/or complete closing of the first branch line (7), and
d) means (11) for controlling the closing elements (22, 23), which are set up in such a way that the first branch closing element (23) is fully or partially open when the first feed closing element (22) begins the closing or has reached a predetermined closing state.

11. Device according to Claim 10, **characterized in that** the first branch line (7) leads to the starting container (2).

12. Device according to Claim 10, **characterized by**
e) a second target container, supplied from the first branch line (7),
f) a second branch line, branching off from the first branch line (7),
g) a second feed closing element, arranged downstream of the first branch closing element (23) in the direction of flow and suitable for the partial and complete closing of the first branch line (7),
h) a second branch line, branching off from the first branch line (7) between the first branch closing element (23) and the second feed closing element,
i) a second branch closing element, suitable for the partial or complete closing of the second branch line, and
j) means for controlling the second closing elements, which are set up in such a way that the second branch closing element is fully or partially open when the second feed closing element begins the closing or has reached a predetermined closing state.

13. Device according to one of Claims 10 to 12, **characterized in that** the means (11) for controlling the closing elements (22, 23) are set up for automatic control in dependence on the amount of fluid with which the associated target container (3) has been filled.

14. Device according to one of Claims 10 to 13, **characterized in that** the feed line (5) and the branch line (7) respectively comprise a flexible wall material, at least in the region of the closing elements (22, 23), and the closing elements (22, 23) are set up in such a way that the closing of the corresponding fluid line (5, 7) is performed by pressure applied to the line wall from the outside.

15. Device according to one of Claims 10 to 14, **characterized in that** the means (11) for controlling the closing elements (22, 23) are set up in such a way that the degree of opening of the respective branch closing element (23) and the degree of opening of the associated feed closing element (22) depend explicitly on each other.

16. Device according to Claim 15, **characterized in that** the branch closing element (23) and the associated feed closing element (22) have a common drive (17, 19).

17. Device according to Claim 16, **characterized in that** the branch closing element (23) and the associated feed closing element (22) are connected to each other in one piece.

18. Device according to one of Claims 10 to 17, **characterized by** at least one holding unit (6), which has means (16) for the releasable fixing of two fluid lines, for example the feed line (5) and the first branch line (7), the two closing elements (22, 23) associated with these fluid lines (5, 7) and a drive (17, 19) for the closing elements (22, 23).

19. Device according to one of Claims 10 to 18, **characterized in that** the two closing elements (22, 23) are arranged between the fluid lines (5, 7).

20. Device according to one of Claims 10 to 18, **characterized in that** a peristaltic pump (4) is provided between the starting container (2) and the first branch line.
